# EUROPEAN PATENT APPLICATION

(11) **EP 4 364 871 A1**
(43) Date of publication of application: **08.05.2024**
(21) Application number: 21947813.8
(22) Date of filing: 04.08.2021
(51) Int. Cl.: B22F 9/02

(54) **TANTALUM-TUNGSTEN ALLOY POWDER AND PREPARATION METHOD THEREFOR**

(30) Priority: 30.06.2021 CN 202110737910
(71) Applicant: Ningxia Orient Tantalum Industry Co., Ltd., Shizuishan, Ningxia 753000 (CN)
(72) Inventor: LI, Xiaoping, Shizuishan, Ningxia 753000 (CN); ZHANG, Yajun, Shizuishan, Ningxia 753000 (CN); LI, Xingyu, Shizuishan, Ningxia 753000 (CN); TUO, Wanyong, Shizuishan, Ningxia 753000 (CN); MA, Jing, Shizuishan, Ningxia 753000 (CN); LIU, Lei, Shizuishan, Ningxia 753000 (CN); CHE, Saili, Shizuishan, Ningxia 753000 (CN)
(74) Representative: Kohler Schmid Möbus Patentanwälte
(86) International application number: PCT/CN2021/110476
(87) International publication number: WO 2023/272871

(57) **Abstract**

A method for preparing tantalum-tungsten alloy powder, comprising the following steps: providing a tantalum-tungsten alloy ingot; repeatedly smelting the tantalum-tungsten alloy ingot for many times; forging a product of the previous step; placing the product of the previous step in a hydrogen atmosphere to perform a hydrogenation heat treatment; mechanically crushing the product of the previous step to obtain a coarse powder; sieving, from the coarse powder, a powder having a particle size ranging from a µm to b µm, wherein a=10-20, b=50-60; performing dehydrogenation heat treatment on the product of the previous step under vacuum; adding a magnesium powder to the product of the previous step to perform an deoxygenation heat treatment; and performing plasma spheroidization treatment on the product of the previous step, such that the sphericity of the powder reaches more than 99%.

## Description

### Technical Field

The present application is in the field of materials, and it particularly relates to tantalum-tungsten alloy powder and a preparation method thereof.

### Background Art

The tantalum-tungsten alloy is a rare metal alloy material with high density, high melting point and high strength, which has very high strength at high temperatures, good ductility, weldability and excellent corrosion resistance, and it is suitable for working environments with high temperatures, high pressures, corrosion resistance and the like. Recently, it is developed quickly in industry, particularly, applied widely in the aspects of chemical industry, aerospace, atomic energy industry and the like, being a very important engineering and functional material. The tungsten in the tantalum forms a displacement-type continuous solid solution with the tantalum, to take solid-solution strengthening effects, and it can significantly increase room temperature and high temperature mechanical properties of the tantalum metal.

At present, the tantalum-tungsten alloy materials are routinely processed into blanks by hot working extrusion, hammer cogging, radial forging, rolling and other modes and then are processed into parts with required structures by machining and other modes. In recent years, as the 3D printing technique develops, for specially-shaped products with personalized requirements, they can be realized by the means of 3D printing. Current researches on pure tantalum spherical powder are relatively mature in China, while researches on tantalum-tungsten alloy spherical powder are not mature. By adopting this solution, a tantalum-tungsten alloy spherical powder which can meet 3D printing requirements is prepared.

### Summary of the Invention

It was found by the inventor that during additive manufacturing, tantalum-tungsten alloys are ready to crack by absorbing oxygen and provide an insufficient powder sphericity, thereby forming printing defects.

The present application provides a tantalum-tungsten alloy powder for additive manufacturing and a preparation method thereof. The tantalum-tungsten alloy powder provided by the present application has uniform alloy components, a concentrated particle size distribution (for example, a particle size ranging from 15 µm to 53 µm), a high sphericity and a low oxygen content (for example, an oxygen content ≤300 ppm). The tantalum-tungsten alloy spherical powder of the present application can meet process requirements of 3D printing (additive manufacturing). The present application, by applying the tantalum-tungsten alloy powder of the present application in the 3D printing technique, can realize the printing of personalized parts with complex structures and further promote the application of the tantalum-tungsten alloy in the fields of chemical industry, aerospace, weapons, atomic energy industry and the like.

The present disclosure provides a method of preparing a tantalum-tungsten alloy powder, comprising the steps of:
providing a tantalum-tungsten alloy ingot;
repeatedly smelting the tantalum-tungsten alloy ingot for many times; forging a product of the previous step;
placing a product of the previous step in a hydrogen atmosphere to perform a hydrogenation heat treatment;
mechanically crushing a product of the previous step to obtain a coarse powder;
sieving a powder having a particle size ranging from a µm to b µm from the coarse powder, a=10-20, b=50-60;
performing dehydrogenation heat treatment on a product of the previous step in vacuum;
adding a magnesium powder (e.g., added in 0.1 to 1 wt%) into a product of the previous step to perform a deoxygenation heat treatment;
performing plasma spheroidization treatment on a product of the previous step, so that the powder has a sphericity of more than 99%.

By using the above specific process order, i.e., blanking, hydrogenating, crushing, dehydrogenation, deoxygenation, acid washing, and plasma spheroidizing treatments, the obtained tantalum-tungsten alloy spherical powders have the advantages of uniform components, a concentrated particle size distribution, a high sphericity and a low oxygen content.

In some embodiments, a forging temperature is from 800 °C to 900 °C.

In some embodiments, a hydrogen pressure of the hydrogen atmosphere is from 0.16 MPa to 0.19 MPa.

In some embodiments, a temperature of the hydrogenation heat treatment is from 600 °C to 900 °C.

In some embodiments, a temperature of the dehydrogenation heat treatment is from 600 °C to 900 °C.

In some embodiments, a temperature of the deoxygenation heat treatment is from 500 °C to 1000 °C.

In some embodiments, the hydrogenation heat treatment comprises the operations of:
heat treating at T1 for 3 hours -5 hours (e.g. 4 hours), T1=500 °C -800 °C (e.g. 600-700 °C);
heat treating at T2 for 0.5 hours -2.5 hours (e.g., 1 hours -2 hours), T2=600 °C -900 °C (e.g., 700 °C -800 °C), T2-T1 ≥50.

In some embodiments, the dehydrogenation heat treatment comprises the operations of:
heat treating at 600 °C -700 °C (e.g. 650 °C) for 60 minutes -90 minutes (e.g. 70 minutes -80 minutes);
heat treating at 880 °C -920 °C (e.g. 900 °C) for 120 minutes -180 minutes (e.g. 140 minutes -160 minutes).

In some embodiments, the deoxygenation heat treatment comprises the operations of:
heat treating at 500 °C -650 °C (e.g. 550 °C -600 °C) for 60 minutes -90 minutes (e.g. 70 minutes -80 minutes);
heat treating at 800 °C -900 °C (e.g., 850 °C) for 700 minutes -800 minutes (e.g., 750 minutes).

In some embodiments, between the forging step and the hydrogenation heat treatment step, an acid washing step is further included.

In some embodiments, between the deoxygenation heat treatment and the plasma spheroidization treatment, an acid washing step is further included.

In some embodiments, the acid used in the acid washing is a mixed acid of hydrofluoric acid, nitric acid, and hydrochloric acid.

In some embodiments, the tantalum-tungsten alloy comprises tantalum element and tungsten element, wherein the content of the tantalum element is from 85 wt% to 95 wt%, and the content of the tungsten element is from 5 wt% to 15 wt%.

In some embodiments, the tantalum tungsten alloy powder has a particle size ranging from 15 µm to 60 µm and an oxygen content <300 ppm.

In some embodiments, the side gas of the plasma spheroidization treatment is He gas and Ar gas; the powder-delivering carrier gas is Ar gas; the central gas is Ar gas; the plasma power is from 35 KW to 40 KW; the powder-delivering rate is from 25 g/min to 30 g/min.

In some embodiments, the above individual steps are performed according to the literally described order.

In some embodiments, the order for performing the above individual steps is arbitrary, but not being limited to the literally described order.

In some aspects, the present disclosure provides a tantalum-tungsten alloy powder prepared by any one of the above methods.

In some aspects, the present disclosure provides an additive manufacturing method comprising using the above tantalum-tungsten alloy powder to perform additive manufacturing (e.g., 3D printing).

In some aspects, the present disclosure provides an additively manufactured product prepared by the above additive manufacturing method.

### Beneficial Effects of the Application

At present, routine processes cannot realize the processing of partially personalized, specially-shaped products. For the tantalum-tungsten alloy spherical powder for 3D printing, no preparation technique currently exists.

One or more embodiments of the present application have one or more of the following advantages:
(1) the alloy components of the tantalum-tungsten alloy powder are uniform;
(2) the particle size distribution of the tantalum-tungsten alloy powder is concentrated;
(3) the sphericity of the tantalum-tungsten alloy powder is high;
(4) the oxygen content of the tantalum-tungsten alloy powder is low;
(5) the tantalum-tungsten alloy spherical powder manufactured in the present application, by using a 3D printing technique, can realize processing a small batch of personalized, specially-shaped parts, increase utilization rates of materials, and reduce manufacturing costs.

### Illustrations of Terms

The term "plasma spheroidization technique" refers to spraying metal powders into an inductive plasma jet, which will immediately melt at very high temperatures and then automatically turn into spheres under the action of surface tension. Once these spherical liquid metal droplets depart from the plasma jet, they will be immediately cooled and hardened into spherical particles.

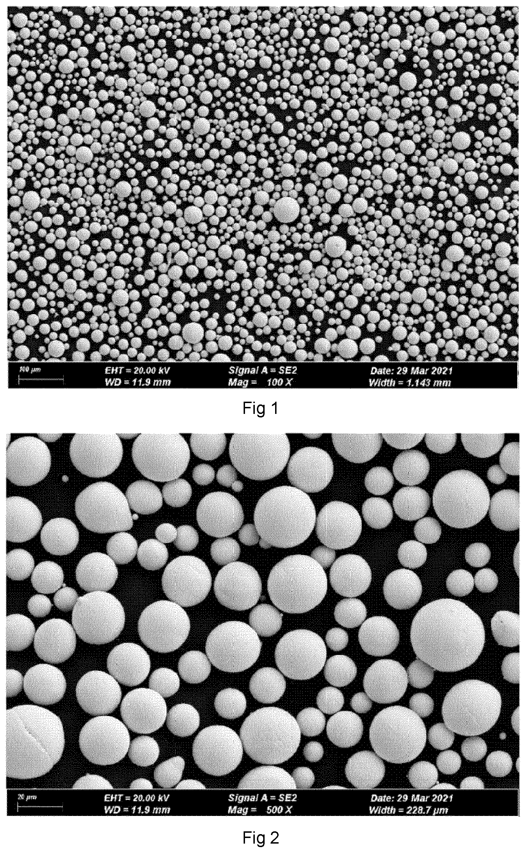

**Brief Description of the Drawings** FIG. 1 is a 100-fold magnified photograph of the tantalum-tungsten alloy spherical powder of Example 1; FIG. 2 is a 500-fold magnified photograph of the tantalum-tungsten alloy spherical powder of Example 1.

### Specific Models for Carrying Out the Application

At now, the specific embodiments of the present application are described in detail. While the present application will be described in combination with these specific embodiments, it should be recognized that it is not intended to limit the application to these specific embodiments. On the contrary, the embodiments are intended to cover alternative, modified and equivalent embodiments which may be included within the spirit and scope of the present application defined by the pending claims. In the following depictions, a number of specific details are elaborated in order to provide thorough appreciations of the present application. The present application may be affected without some or all of these specific details. In other instances, not to unnecessarily obscure the present application, well known process operations are not described in detail.

The singular forms "a", "an", and "the", when used in combination of the wording "comprising", "method comprising" or similar expressions in the present specification and the attached claims, include plural references unless clearly indicated in the context otherwise. Unless defined otherwise, all technical and scientific terms used here have the same meaning as those commonly appreciated by those skilled person in the technical field of the present application.

Unless illustrated particularly, the reagents, methods and apparatus used in the present application are routine food-grade reagents, methods and apparatus in the art.

Unless illustrated particularly, the test conditions used in the examples of the present application are routine test conditions in the art. Unless illustrated particularly, all the reagents used in the examples of the present application are commercially available.

### Example 1

1) Ingot casting: a Ta10W tantalum-tungsten alloy (Ta 90 wt% - W 10 wt%) was smelted with an ALD1200KW high-vacuum electron beam furnace to cast an ingot, and the smelting was repeated for 2 times to make the non-uniformity of tungsten within 10%.
2) Forging: the ingot obtained in 1) was heated for forging, and by controlling a forging temperature to be 850 °C, it was forged into 50×120×L mm; as-cast crystal grains were fully crushed to obtain a crushed internal structure;
3) machining: a forged blank obtained in 2) were turned at the two end faces, with 1.5 mm thickness in a single turning, and milled at 4 sides to thoroughly remove forging defects such as folding and the like;
4) acid washing: a product in the previous step was washed with an acid solution with the formulating ratio: HF (>40%): HNOs (65%-68%): HCl (36%-38%) = 1: 2: 3 (volume ratio), to remove surface impurities;
5) hydrogenating: a product in the previous step was charged into a reaction bomb which was evacuated to 10⁻⁶ kPa, heated at 600 °C /4 hours, kept the temperature at 800 °C for 2 hours, and charged with hydrogen gas to obtain the pressure 0.19 MPa; cooled, the hydrogen gas was absorbed, the hydrogen charging was terminated when the actual temperature was decreased to 100 °C;
6) crushing: a product in the previous step was crushed with a jaw crusher until the particle size was not more than 100 µm;
7) powder sieving: a product in the previous step was sieved with a gas protection sieving machine to obtain a tantalum-tungsten alloy powder with a particle size ranging from 15 µm to 53 µm;
8) dehydrogenation treatment: a product in the previous step was subjected to a dehydrogenation treatment by charging it in a reaction bomb which, particularly, was evacuated to 10⁻⁶ kPa, the dehydrogenation heat treatment comprising the steps of:
   heating treating with 650 °C /85 minutes,
   heating treating with 900 °C /175 minutes;
9) performing deoxygenation: in 0.2%-0.8% by weight of a product in the previous step, a magnesium powder was mixed to perform a heat treatment in an argon atmosphere, with the parameters including:
   heat treating at 650 °C for 85 minutes;
   heat treating at 900 °C for 750 minutes;
10) acid washing: a product in the previous step was acid washed to remove impurities, wherein the acid used for the acid washing has a formula: HF (concentration >40%): HNOs (concentration 65%-68%): HCl (concentration 36%-38%) = 1: 2: 3 (volume ratio);
11) plasma spheroidization: a product in the previous step was spheroidized with a plasma spheroidization technique, with the following spheroidization parameters: side gas: He 60 slpm, side gas: Ar 50 slpm, powder-delivering carrier gas: Ar 4 slpm, central gas: Ar 18 slpm, plasma power: 40 KW and powder-delivering rate: 30 g/min.

### Example 2

1) Ingot casting: a Ta10W tantalum-tungsten alloy (Ta 90 wt% - W 10 wt%) was smelted with an ALD1200KW high-vacuum electron beam furnace to cast an ingot, and the smelting was repeated for 2 times to make the non-uniformity of tungsten within 10%.
2) Forging: the ingot obtained in 1) was heated for forging, and by controlling the forging temperature to be 900 °C, it was forged into 50×120×L mm; as-cast crystal grains were fully crushed to obtain a crushed internal structure;
3) machining: a forged blank obtained in 2) were turned at the two end faces, with 1.5 mm thickness in a single turning, and milled at 4 sides to thoroughly remove forging defects such as folding and the like;
4) acid washing: a product in the previous step was washed with an acid solution with the formulating ratio: HF (>40%): HNOs (65%-68%): HCl (36%-38%) = 1: 2: 3 (volume ratio), to remove surface impurities;
5) hydrogenating: the product in the previous step was charged into a reaction bomb which was evacuated to 10⁻⁶ kPa, heated at 750 °C /4 hours, kept the temperature at 800 °C for 2 hours, and charged with hydrogen gas to obtain the pressure 0.19 MPa; cooled, the hydrogen gas was absorbed; the hydrogen charging was terminated when the actual temperature was decreased to 100 °C;
6) crushing: a product in the previous step was crushed with a jaw crusher until the particle size was from 0 to 100 µm;
7) powder sieving: a product in the previous step was sieved with a gas protection sieving machine to obtain a tantalum-tungsten alloy powder having a particle size ranging from 15 µm to 53 µm;
8) dehydrogenating treatment: the product in the previous step was subjected to a dehydrogenation treatment by charging it in a reaction bomb which, particularly, was evacuated to 10⁻⁶ kPa, the dehydrogenation heat treatment comprising the steps of:
   heating treating with 700 °C /85 min,
   heating treating with 900 °C /175 min;
9) performing deoxygenation: in 0.5 wt% by weight of a product in the previous step, a magnesium powder was mixed to perform a heat treatment in an argon atmosphere, with the parameters including:
   heat treating at 650 °C for 85 minutes;
   heat treating at 900 °C for 750 minutes;
10) acid washing: a product in the previous step was acid washed to remove impurities, wherein the acid used for the acid washing has a formula: HF (concentration >40%): HNOs (concentration 65%-68%): HCl (concentration 36%-38%) = 1: 2: 3 (volume ratio);
11) performing plasma spheroidization: a product in the previous step was spheroidized with a plasma spheroidization technique, with the following spheroidization parameters: side gas: He 60 slpm, side gas: Ar 50 slpm, powder-delivering carrier gas: Ar 4sl pm, central gas: Ar 18 slpm, plasma power: 40 KW and powder-delivering rate: 30 g/min.

### Comparative Example 1

10 kg of a tantalum powder prepared by a hydrogenation-dehydrogenation method were taken and then passed through a 100-mesh screen on a vibration sieving apparatus to remove coarse particles.

The above tantalum powder was spheroidized with a plasma spheroidization apparatus, wherein the plasma torch was a direct current plasma torch; the working gas was argon gas, the plasma spheroidization power was 5 KW; the flow of the working gas was 20 L/min; the flow of the side gas was 100 L/min; the system pressure was 80 Kpa; and the oxygen content of the spheroidized tantalum powder was 400 ppm.

The spheroidized tantalum powder was sieved with a vibration sieving apparatus, where the mesh number of the screen was 100 meshes, to obtain a tantalum powders having a particle size of less than or equal to 150 µm.

The above tantalum powder having a particle size of less than or equal to 150 µm was graded with an argon protection airflow grading machine, to obtain spherical powder having a particle size distribution between 53 µm and 150 µm.

### Comparative Example 2

Tantalum ingots with a tantalum content of more than 99.995% were selected and the tantalum ingots were hydrogenated and crushed; the hydrogenated tantalum crumbs were crushed by milling; the milled material was passed through a 400 meshes sieve, and by taking the tantalum powder below the 400 meshes sieve, 20 kg of tantalum particles with - 400 meshes were obtained; subsequently, the tantalum particles were charged into a reaction bomb, which was heated under evacuated conditions, and kept at the temperature 750 °C for about 120 minutes, and then they was cooled, discharged and passed through a 100 meshes sieve, to obtain 19.87 kg of a dehydrogenated tantalum powder; the dehydrogenated tantalum powder was charged into an airflow mill to perform airflow shaping, during which, the working pressure was 6.5 kg, and the primary, secondary working frequencies were 40 Hz and 40 Hz respectively, and after shaping for 15 hours, 14.62 kg of the primary tantalum powder and 3.20 kg of the secondary tantalum powder were obtained; the primary tantalum powder after the airflow shaping was acid washed with a mixed acid of HNOs and HF (the HNOs: HF: water volume ratio was 4:1:20) to remove metal impurities, and it was dried and sieved to obtain 13.46 kg of acid washed tantalum powder; then, the acid washed tantalum powder was heat treated under the vacuum condition of 10⁻¹ Pa and kept at the temperature 1100 °C for 60 minutes, and finally, it was cooled, passivated and discharged; a heat treated tantalum powder was mixed with a magnesium powder in 1.3% by weight of the tantalum powder, and then they were heated to 750 °C under the protection of an inert gas, kept at the temperature for 2 hours, and then evacuated to discharge magnesium for 3 hours; at last, the mixture was cooled, passivated, discharged, washed with nitric acid to remove redundant magnesium and magnesium oxide, and then washed with deionized water to be neutral; the tantalum powder was dried and sieved to obtain 12.74 kg of tantalum powder.

### Analyses and Detections

The above product powders obtained in Examples 1-2 and Comparative Examples 1-2 were analyzed as follows.

### 1. Ingredients and Morphology

FIGS. 1 and 2 were 100-fold and 500-fold magnified photographs of the tantalum-tungsten alloy spherical powder of Example 1, respectively. As shown in FIGS. 1 to 2, the tantalum-tungsten alloy spherical powder of Example 1 had a narrow particle size distribution and a good sphericity.

The sphericity and oxygen contents of the product powders obtained in Examples 1 to 2 and Comparative Examples 1 to 2 were measured. The sphericity was judged according to the detection method: "YS/T1297-2019: Measuring method for sphericity ratio of titanium and titanium alloy powders". The oxygen content was measured according to the detection method: "GB/T15076.14-2008: Method for chemical analysis of tantalum and niobium, Determination of oxygen content". The results were shown in the following table:

**TABLE 1**

| Groups | Materials | Sphericity | Oxygen content |
|---|---|---|---|
| Example 1 | Tantalum-tungsten alloy powder | 99.2 | 170 |
| Example 2 | Tantalum-tungsten alloy powder | 99.6 | 142 |
| Comparative Example 1 | Tantalum powder | 99.7 | 325 |
| Comparative Example 2 | Tantalum powder | / | 180 |

As can be seen from above, in Examples 1-2, by using the specific process in the present disclosure, the prepared tantalum-tungsten alloy powders had higher sphericity and lower oxygen contents as compared to those prepared in Comparative Examples 1-2.

### 2. Analyses of Particle Size

According to a comprehensive determining method with "GB/T 1480-2012: Metallic powders - Determination of particle size by dry sieving" and "GB/T 19077-2016: Particle size analysis - Laser diffraction methods", the product powders obtained in Examples 1-2 were analyzed in terms of the particle size, and the results were shown below:

**TABLE 2**

| Groups | D10 | D50 | D90 | Average particle size |
|---|---|---|---|---|
| Example 1 | 19.98 | 31.73 | 49.93 | 15 to 53 |
| Example 2 | 20.85 | 31.68 | 50.83 | 15 to 53 |

As can be seen from above, in Examples 1-2, by using the specific process in the present disclosure, the prepared tantalum-tungsten alloy powders had a narrow particle size distribution.

As can be seen from the experimental data of the above examples, the tantalum-tungsten alloy powders prepared in the present disclosure have one or more of the following advantages:
(1) the alloy components of the tantalum-tungsten alloy powder are uniform;
(2) the particle size distribution of the tantalum-tungsten alloy powder is concentrated;
(3) the sphericity of the tantalum-tungsten alloy powder is high;
(4) the oxygen content of the tantalum-tungsten alloy powder is low.

The tantalum-tungsten alloy spherical powder manufactured in the present application, by using a 3D printing technique, can realize processing of a small batch of personalized, specially-shaped parts, increase utilization rates of materials, and reduce manufacturing costs.

Finally, it should be illustrated that: the above Examples are only used for illustrating the technical solution of the present application but not for limiting it; while the present application is described in detail with reference to the preferred Examples, it should be appreciated for those skilled in the art that: modifications to the specific embodiments of the present application and equivalent substitutions to a part of the technical features can be still made; without departing from the spirit of the application, each of them should be contained in the scope of the technical solution as claimed in the present application.

## Claims

1. A method of preparing a tantalum-tungsten alloy powder, comprising the steps of:
providing a tantalum-tungsten alloy ingot;
repeatedly smelting the tantalum-tungsten alloy ingot for many times;
forging a product of the previous step;
placing a product of the previous step in a hydrogen atmosphere to perform a hydrogenation heat treatment;
mechanically crushing a product of the previous step to obtain a coarse powder;
sieving a powder having a particle size ranging from a µm to b µm from the coarse powder, a=10-20, b=50-60;
performing dehydrogenation heat treatment on a product of the previous step in vacuum;
adding a magnesium powder into the product of a previous step to perform a deoxygenation heat treatment;
performing plasma spheroidization treatment on a product of the previous step, so that a powder has a sphericity of more than 99%.

2. The method according to claim 1, wherein it has one or more of the following features:
a forging temperature is from 800 °C to 900 °C;
a hydrogen pressure of the hydrogen atmosphere is from 0.16 MPa to 0.19 MPa;
a temperature of the hydrogenation heat treatment is from 600 °C to 900 °C;
a temperature of the dehydrogenation heat treatment is from 600 °C to 900 °C;
a temperature of the deoxygenation heat treatment is from 500 °C to 1000 °C.

3. The method according to claim 1, wherein the hydrogenation heat treatment comprises the following operations of:
heat treating at T1 for 3 hours -5 hours, T1=500 °C -800 °C;
heat treating at T2 for 0.5 hours -2.5 hours, T2=600 °C -900 °C;
T2-T1 ≥50 °C.

4. The method according to claim 1, wherein the dehydrogenation heat treatment comprises the following operations of:
heat treating at 600 °C -700 °C for 60 minutes -90 minutes;
heat treating at 880 °C -920 °C for 120 minutes -180 minutes.

5. The method according to claim 1, wherein the deoxygenation heat treatment comprises the operations of:
heat treating at 500 °C -650 °C for 60 minutes -90 minutes;
heat treating at 800 °C -900 °C for 700 minutes -800 minutes.

6. The method according to claim 1, wherein between the forging step and the hydrogenation heat treatment step, further comprising an acid washing step.

7. The method according to claim 1, wherein between the deoxygenation heat treatment and the plasma spheroidization treatment, further comprising an acid washing step.

8. The method according to claim 6 or 7, wherein the acid used in the acid washing is a mixed acid of hydrofluoric acid, nitric acid, and hydrochloric acid.

9. The method according to claim 1, wherein the tantalum-tungsten alloy comprises tantalum element and tungsten element, wherein the content of the tantalum element is from 85 wt% to 95 wt%, and the content of the tungsten element is from 5 wt% to 15 wt%.

10. The method according to claim 1, wherein the tantalum-tungsten alloy powder has a particle size ranging from 15 µm to 60 µm and an oxygen content <300 ppm.

11. A tantalum-tungsten alloy powder prepared by the method according to any one of claims 1 to 9.
